# EUROPÄISCHE PATENTSCHRIFT

(11) **EP 3 795 731 B1**
(45) Veröffentlichungstag und Bekanntmachung des Hinweises auf die Patenterteilung: **24.07.2024**
(21) Anmeldenummer: 19197842.8
(22) Anmeldetag: 17.09.2019
(51) Int. Cl.: D04H 1/728, D01D 5/00, G01B 11/26, G01B 11/27, G01N 21/21, G01N 21/898

(54) **VERFAHREN ZUM BESTIMMEN EINER ORIENTIERUNG VON FASERN EINES VLIESES UND FASERORIENTIERUNGS-MESSGERÄT**
METHOD FOR DETERMINING THE ORIENTATION OF FIBERS OF A NONWOVEN FABRIC AND FIBER ORIENTATION MEASURING DEVICE
PROCÉDÉ DE DÉTERMINATION D'UNE ORIENTATION DES FIBRES D'UN NON TISSÉ ET APPAREIL DE MESURE DE L'ORIENTATION DES FIBRES

(43) Veröffentlichungstag der Anmeldung: 24.03.2021
(73) Patentinhaber: Gottfried Wilhelm Leibniz Universität Hannover, 30167 Hannover (DE)
(72) Erfinder: FRICKE, Dierk, 30163 Hannover (DE); BECKER, Alexander, 32175 Lehrte (DE); ROTH, Bernhard, 33719 Bielefeld (DE); GLASMACHER, Birgit, 30419 Hannover (DE)
(74) Vertreter: Gramm, Lins & Partner Patent- und Rechtsanwälte PartGmbB

(56) Entgegenhaltungen:
- DE-B3- 102011 001 106
- DE-T2- 69 418 505
- JP-A- 2015 033 587
- US-A- 4 730 931
- US-B1- 7 289 211

## Beschreibung

Die Erfindung betrifft ein Verfahren zum Bestimmen einer Orientierung von Fasern eines Vlieses. Gemäß einem zweiten Aspekt betrifft die Erfindung eine Vlies-Herstellvorrichtung.

Vliese werden beispielsweise als medizinische Implantate verwendet. Vliese bestehen aus einem oder mehreren Endlosfäden oder einer Vielzahl kleiner Fäden, die mehr oder weniger ungeordnet angeordnet sind. Die Ausrichtung der Fäden kann mittels einer Orientierungsdichtefunktion beschrieben werden. Diese gibt an, wie groß der relative Anteil an Fasern oder Faserabschnitten im jeweiligen betrachteten Raumbereich ist, die in eine vorgegebene Richtung orientiert sind.

Bei einer rein zufälligen Anordnung der Fasern ist die Orientierungsdichtefunktion eine Konstante. Hat das Vlies eine Vorzugsorientierung, so hat die Orientierungsdichtefunktion bezüglich dieser Richtung ein Maximum. Die Breite der Orientierungsdichtefunktion gibt den Orientierungsgrad an und ist ein Maß dafür, wie stark die einzelnen Fasern des Vlieses ausgerichtet sind.

Zur morphologischen Charakterisierung von Vliesen wird im Moment die Raman-Spektroskopie oder Rasterelektronenmikroskopie verwendet. Sowohl für die Raman-Spektroskopie als auch für die rasterelektronenmikroskopische Charakterisierung werden teure Geräte benötigt. Zudem können mit diesen Verfahren nur einzelne Ausschnitte der Vliese untersucht werden. Das macht eine repräsentative Charakterisierung der Vliese arbeits- und zeitaufwändig. Nachteilig ist zudem, dass die elektronenmikroskopische Untersuchung nicht zerstörungsfrei ist. Auch bei der Untersuchung mittels Raman-Spektroskopie wird das Vlies erwärmt, was dessen Eigenschaften verändern kann.

Die genannten Nachteile machen es unmöglich, beispielsweise im Rahmen einer Operation festzustellen, ob ein aus einem Vlies aufgebautes Implantat korrekt orientiert ist.

Aus der JP 2015 033 587 A ist bekannt, Bilder von verletzten Bändern im menschlichen Körper mittels polarisierten Lichts aufzunehmen, sodass der behandelnde Arzt die Ausrichtung des verletzten Bands besser erkennen kann. Das Verfahren ist auf menschliches Gewebe beschränkt.

Aus der US 7 289 211 B1 ist ein Verfahren zum Erkennen von Endometriose mittels polarisiertem Licht bekannt. Durch das Verfahren kann die Erkrankung auch durch die Haut erkannt werden. Die Druckschrift äußert sich nicht zur Bestimmung der Vorzugsorientierung eines Vlieses.

Die DE 10 2011 001 106 B3 betrifft ebenfalls ein Verfahren zur Analyse von Papier. Um Faserkreuzungen und Faserbindungen im Papier voneinander unterscheiden zu können, wird polarisiertes Licht eingesetzt. Faserkreuzungen und Faserbindungen spielen in Vliesen für die Erfindung keine Rolle.

Aus der US 4 730 931 ist bekannt, die Orientierung von Fasern eines Vlieses mittels kohärenten Lichts zu ermitteln.

Die DE 694 18 505 T2 beschreibt ein Verfahren zur Orientierungsbestimmung von Papierfasern. Dabei wird polarisiertes oder unpolarisiertes Licht eigesetzt. Mittels des Verfahrens kann eine Qualitätssicherung bei der Papierherstellung durchgeführt werden. Der Erfindung liegt die Aufgabe zugrunde, die Messung der Faserorientierung zu verbessern.

Die Erfindung löst das Problem durch ein Verfahren mit den Merkmalen von Anspruch 1.

Gemäß einem zweiten Aspekt löst die Erfindung das Problem durch eine Vlies-Herstellvorrichtung mit den Merkmalen von Anspruch 6.

Vorteilhaft an der Erfindung ist, dass die Orientierung in der Regel zerstörungsfrei gemessen werden kann. Es ist damit, beispielsweise bei der Herstellung von Implantaten aus Vliesen möglich, diese zu 100% zu prüfen, ohne deren Eigenschaften zu verändern.

Vorteilhaft ist zudem, dass eine Prüfung auf die Orientierung meist vergleichsweise schnell erfolgen kann. Es ist damit möglich, die ermittelte Orientierung zum Regeln des Produktionsprozesses des Vlieses zu verwenden.

Vorteilhaft ist zudem, dass eine ortsaufgelöste Messung der Orientierung möglich ist. Es ist daher möglich und stellt eine bevorzugte Ausführungsform dar, dass die Orientierung von Fasern eines gradierten Vlieses vermessen wird. Ein gradiertes Vlies ist ein Vlies, dessen Orientierung und/oder dessen Orientierungsgrad lokal variiert. Derartige gradierte Vliese werden häufig in der Medizin, beispielsweise in Form von Implantaten verwendet, um Bänder oder Sehnen zu ersetzen, die von Natur aus ebenfalls Bereiche unterschiedlicher Orientierung und/oder unterschiedliche Orientierungsgrade haben.

Im Rahmen der vorliegenden Beschreibung wird unter der Orientierung insbesondere eine Richtungsangabe, beispielsweise ein Richtungswinkel oder ein Richtungsvektor verstanden, der die Richtung angibt, in die die Orientierungsdichtefunktion ihr Maximum hat.

Unter dem Orientierungsgrad wird insbesondere das Breitenmaß für die Orientierungsdichtefunktion verstanden. Die Orientierung wird beispielsweise in Grad relativ zu einer vorgegebenen Soll-Orientierung oder in einem vorgegebenen Koordinatensystem angegeben, beispielsweise einem Proben-Koordinatensystem. Der Orientierungsgrad wird beispielsweise durch das Breitenmaß gemessen. Das Breitenmaß ist beispielsweise die Halbwertsbreite, also die Breite der Orientierungsdichtefunktion bei der Hälfte dessen maximalen Werts. Kann die Orientierungsdichtefunktion durch eine Gauß-Verteilung beschrieben werden, so ist das Breitenmaß vorzugsweise die Varianz oder die Standardabweichung oder eine daraus berechnete Größe.

Beispielsweise kann die Orientierung durch einen Pfeil bildlich dargestellt sein, Der Orientierungsgrad kann beispielsweise durch eine Farbe oder eine Strichstärke des Pfeils dargestellt sein.

Der Ausrichtungsgrad kann durch ein Breitenmaß quantifiziert werden, das die Breite der Orientierungsdichtefunktion angibt. Je geringer die Breite der Orientierungsdichtefunktion ist, desto stärker sind die Fasern des Vlieses in die gleiche Richtung ausgerichtet.

Allerdings ist die Erfindung nicht auf die Bestimmung der Orientierung von Fasern in medizinisch genutzten Vliesen beschränkt. Vielmehr kann das Vlies, dessen Orientierung bestimmt wird, auch Teil eines faserverstärkten Kunststoffs sein oder werden. Erfindungsgemäß ist daher auch ein Verfahren zum Bestimmen einer Orientierung von Fasern mit den Schritten: (a) Bestrahlen der Fasern mit polarisiertem Licht, dessen Polarisation sich zeitabhängig ändert, (b) Bestimmen einer ortsaufgelösten, zeitlich abhängigen Polarisation von Licht, das mit den Fasern wechselgewirkt hat, sodass Polarisationsdaten erhalten werden, und (c) Berechnen der Orientierung, insbesondere der Mueller-Matrix, aus den Polarisationsdaten. Die oben und im Folgenden genannten Vorteile und bevorzugten Ausführungsformen gelten auch für diese weitere Form der Erfindung.

Vorzugsweise wird das Verfahren zum Überwachen eines Elektrospinnverfahrens eingesetzt. Bei einem Elektrospinnverfahren wird ein Polymer, das in einem Lösungsmittel gelöst ist, durch eine Öffnung, die Düse genannt wird, abgegeben. Zwischen der Lösung und einem Kollektor wird eine elektrische Hochspannung angelegt, die vorzugsweise eine Gleichspannung ist. Durch das entstehende elektromagnetische Feld bildet sich ein feiner Endlosfaden, der sich auf dem Kollektor in Form eines Vlieses niederschlägt.

Die lokale Orientierung des Endlosfadens, also die lokale Orientierung des entsprechenden Faserabschnitts, wird in der Regel durch die Konzentration der Polymerlösung, den Durchmesser der Düse, durch die das in Lösungsmittel gelöste Polymer austritt, die Flussrate, die Kollektor-Geschwindigkeit, insbesondere die Umfangsgeschwindigkeit, des Kollektors, einen Abstand zwischen Kanüle und Oberfläche des Kollektors und die Spannung zwischen dem Kollektor und der Hochspannung sowie der Prozessdauer beeinflusst.

Da durch das erfindungsgemäße Verfahren eine sehr schnelle Bestimmung der Orientierung möglich ist, kann zumindest eine Prozessgröße, insbesondere können mehrere der genannten Prozessgrößen, anhand des Ergebnisses der Messung der Orientierung geregelt werden. Unter einem Regeln wird im Rahmen der vorliegenden Beschreibung im regelungstechnischen Sinne verstanden, dass das Ergebnis einer Messung verwendet wird, um eine Prozessgröße zu verändern, sodass die zu regelnde Größe, im vorliegenden Fall die Orientierung und/oder der Orientierungsgrad, möglichst wenig von einem jeweiligen vorgegebenen Soll-Wert abweicht.

Vorzugsweise umfasst das Verfahren die Schritte: (a) zeitabhängiges Erfassen der Orientierung, insbesondere der Mueller-Matrix, (b) Erfassen einer Abweichung zu einer vorgegebenen Soll-Orientierung, insbesondere einer vorgegebenen Soll-Mueller-Matrix, und (c) Ausgeben einer Warnmeldung, wenn die Abweichung einen vorgegebenen Schwellenwert überschreitet. Alternativ oder zusätzlich zum Ausgeben der Warnmeldung wird zumindest ein Prozessparameter anhand der Abweichung geregelt.

Die Abweichung wird vorzugsweise mittels einer Metrik bestimmt, also im mathematischen Sinne einer Abbildung, die symmetrisch ist und die Dreiecksgleichung erfüllt. Es ist aber auch möglich, dass die Abweichung keine Zahl ist, sondern beispielsweise ein Vektor oder eine Matrix, in dessen Einträgen die Differenzen der jeweiligen Einträge der Mueller-Matrix einerseits und der Soll-Mueller-Matrix andererseits stehen. Es ist dann möglich, derartige Prozessparameter in Abhängigkeit von den einzelnen Differenzen der Abweichung zu regeln.

In der Regel führt eine höhere Kollektor-Geschwindigkeit zu einem höheren Ausrichtungsgrad und damit zu einer geringeren Breite der Orientierungsdichtefunktionen. Soll der Orientierungsgrad erhöht werden, kann die Kollektor-Geschwindigkeit erhöht werden. Soll der Ausrichtungsgrad gesenkt werden, kann die Kollektor-Geschwindigkeit gesenkt werden. Die Kollektor-Geschwindigkeit könnte auch als Oberflächengeschwindigkeit bezeichnet werden, da sie sich je nach Geometrie des Kollektors, insbesondere dessen Durchmesser, auch bei konstanter Drehfrequenz ändert.

Wenn der Orientierungsgrad zu hoch ist, wenn also das Breitenmaß für die Orientierungsdichtefunktion zu hoch ist, also von einem Soll-Breitenmaß nach oben abweicht, ist es möglich, die Konzentration des Polymers in seinem Lösungsmittel zu erhöhen. Alternativ oder zusätzlich ist es möglich, die Temperatur und/oder den Druck und/oder Luftfeuchtigkeit von Luft in der Umgebung des entstehenden Fadens so zu ändern, dass das Breitenmaß abnimmt.

Wiederum alternativ oder zusätzlich ist es möglich, einen Kollektor-Düsen-Abstand zu vergrößern, wenn der Orientierungsgrad kleiner ist als ein vorgegebener Maximal-Orientierungsgrad, insbesondere wenn das Breitenmaß kleiner ist als ein vorgegebenes Soll-Breitenmaß. Der Kollektor-Düsen-Abstand ist der Abstand zwischen dem Kollektor und der Düse, durch die das lösungsmittelgelöste Polymer aus einem Behälter austritt.

Als günstige Konzentration haben sich 170 Milligramm pro Milliliter Polycaprolacton in Trifluorethalnol herausgestellt. Es sei darauf hingewiesen, dass dies lediglich ein Beispiel ist, auch andere Kunststoffe und andere Lösungsmittel können verwendet werden.

Vorzugsweise umfasst das Verfahren die Schritte: (a) Bestimmen eines Breitenma-ßes einer Dichte einer Orientierungsdichtefunktion und (b) Verändern einer Kollektor-Geschwindigkeit eines Kollektors einer Vlies-Herstellvorrichtung, die zum Durchführen des Elektrospinnverfahrens verwendet wird, wenn das Breitenmaß größer ist als ein vorgegebenes Maximal-Breitenmaß und/oder Verändern eines Umweltparameters, der eine Evaporationsrate von Lösungsmittel, in dem ein zu verspinnendes Polymer gelöst ist, beeinflusst, wenn das Breitenmaß größer ist als ein vorgegebenes Maximal-Breitenmaß, Verändern einer Konzentration an Polymer im Lösungsmittel, wenn das Breitenmaß größer ist als ein vorgegebenes Maximal-Breitenmaß. Das Breitenmaß der Dichte der Orientierungsdichtefunktion ist ein Maß für den Orientierungsgrad der Faser bzw. der Faserabschnitte.

Ein erfindungsgemäßes Faserorientierungs-Messgerät umfasst vorzugsweise eine Darstellvorrichtung zum bildlichen Darstellen der Orientierung und/oder des Orientierungsgrads.

Gemäß einer bevorzugten Ausführungsform umfasst das Faserorientierungs-Messgerät eine Kamera, die Realbildkamera genannt werden kann, zum Aufnehmen von Bildern des Vlieses und einen Bildschirm zum Darstellen der Bilder. Vorzugsweise ist die Recheneinheit ausgebildet zum Überlagern des Bildes des Vlieses mit der bildlichen Darstellung der Orientierung auf dem Bildschirm. Ein derartiges System kann als Augmented Reality-System beschrieben werden. Insbesondere ist die Recheneinheit ausgebildet zum Überlagern des Bildes des Vlieses mit der bildlichen Darstellung der Orientierung, sodass weiter das Bild des Vlieses erkennbar ist und gleichzeitig die Vorzugsorientierung und/oder der Orientierungsgrad erkennbar sind. Vorzugsweise enthält der Polarisationsmesser eine Kamera. In diesem Fall kann diese Kamera nicht nur zum Messen der Polarisation, sondern auch zum Aufnehmen der Bilder des Vlieses dienen. In diesem Fall ist eine weitere Kamera, die Realbildkamera entbehrlich.

Bevorzugt ist ein Faserorientierungs-Messgerät, das einen Projektor zum Projizieren der bildlichen Darstellung der Orientierung auf das Vlies aufweist, wobei die Recheneinheit ausgebildet ist zum Ansteuern des Projektors, so dass dieser die bildliche Darstellung der Orientierung lagerichtig auf das Vlies projiziert. Der Benutzer sieht dann sowohl das Vlies als auch die darüber projizierte Orientierung und/oder den Orientierungsgrad.

Handelt es sich, wie gemäß einer bevorzugten Ausführungsform vorgesehen, bei dem Faserorientierungs-Messgerät um ein Handgerät, kann es beispielsweise während einer medizinischen Operation dazu verwendet werden, um die Orientierung und/oder den Orientierungsgrad des Vlieses auf dem Vlies selber sichtbar zu machen.

Hier - wie bei allen anderen Ausführungsformen - handelt es sich vorzugsweise um eine ortsaufgelöste bildliche Darstellung der Orientierung und/oder des Orientierungsgrads. Vorzugsweise werden die Orientierung und/oder der Orientierungsgrad in Bezug auf Teilbereiche des Vlieses dargestellt. Diese Teilbereiche können beispielsweise eine Abmessung von maximal 5 Zentimeter, insbesondere maximal 1 Zentimeter haben. Das ermöglicht es beispielsweise einem Operateur, der ein Implantat auf Basis eines Vlieses am Körper eines Patienten befestigen soll, dieses Implantat korrekt zum Körper des Patienten auszurichten und an der richtigen Stelle zu befestigen.

Das faserhaltige Produkt kann, sofern es kein Vlies-Implantat ist, beispielsweise ein faserverstärkter Kunststoff sein. Kunststoffe werden oft mit Fasern verstärkt, um die Zugfestigkeit des entstehenden Komposits zu erhöhen. Eine Anisotropie der Orientierung, das heißt, dass der Orientierungsgrad von 100 % verschieden ist, bewirkt zwar eine geringere maximale Zugfestigkeit bezüglich einer Belastung in Richtung der Orientierung, führt aber in Querrichtung zu einer höheren Zugfestigkeit. Es ist daher wünschenswert, die Orientierung und/oder den Orientierungsgrad zu variieren, um die Verstärkungseigenschaften der Fasern, insbesondere des Vlieses, beim fertigen Komposit-Bauteil optimal zu gestalten. Bei einer erfindungsgemäßen Vlies-Herstellvorrichtung ist eine Qualitätskontrolle eines derartigen faserhaltigen Produkts einfacher möglich.

Vorzugsweise ist die Recheneinheit der Vlies-Herstellvorrichtung ausgebildet zum automatischen Durchführen eines Verfahrens mit den Schritten: (i) zeitabhängiges Erfassen der Orientierung, insbesondere der Mueller-Matrix, der Fasern oder Faserabschnitte, (ii) Erfassen einer Orientierungs-Abweichung von einer vorgegebenen Soll-Orientierung, insbesondere einer vorgegebenen Mueller-Matrix, und (iii) Ausgeben einer Warnmeldung, wenn die Orientierungs-Abweichung einen vorgegebenen Schwellenwert überschreitet und/oder Regeln zumindest eines Prozessparameters anhand der Abweichung.

Vorzugsweise ist die Recheneinheit ausgebildet zum Regeln zumindest eines Prozessparameters, sodass die Orientierungs-Abweichung minimiert wird.

Im Folgenden wird die Erfindung anhand der beigefügten Zeichnungen näher erläutert. Dabei zeigt
- Figur 1: schematisch ein Faserorientierungs-Messgerät,
- Figur 2: eine Ausführungsform eines Faserorientierungs-Messgeräts in Form eines Handgeräts,
- Figur 3: eine erfindungsgemäße Vlies-Herstellvorrichtung und
- Figur 4: eine weitere Ausführungsform eines Faserorientierungs-Messgeräts.

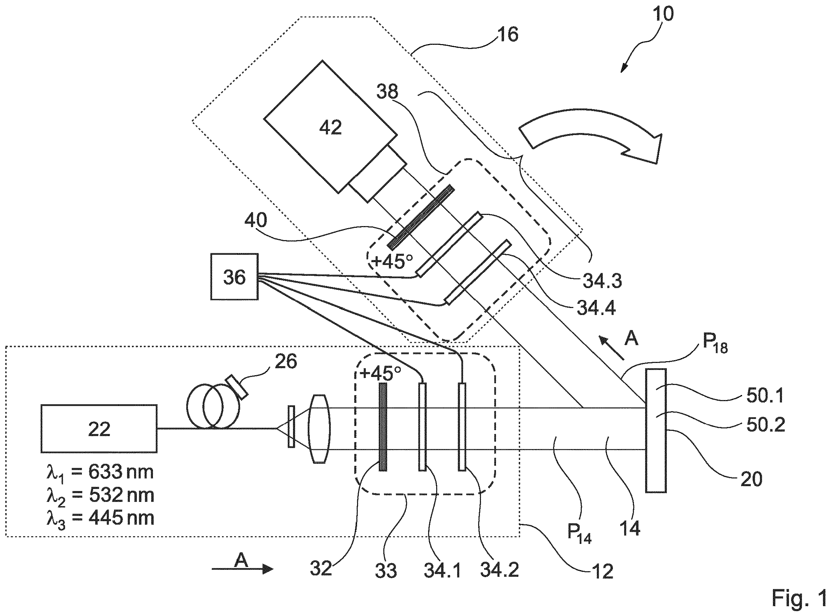

Figur 1 zeigt ein Faserorientierungs-Messgerät 10, mit einer Lichtquelle 12 zum Erzeugen von polarisiertem Licht 14, dessen Polarisation P sich zellabhängig ändert, und einen Polarisationsmesser 16 zum ortsaufgelösten Bestimmen einer zeitabhängigen Polarisation P₁₈(t) von Licht 18, das mit einem Vlies 20 gewechselwirkt hat.

Die Lichtquelle 12 umfasst einen Laser 22, der zumindest Licht einer Wellenlänge *λ*, im vorliegenden Fall mehrere Wellenlängen λ₁, λ₂, λ₃ emittiert. Das Licht wird in einen Lichtleiter 24 in Form einer Glasfaser eingespeist. Mittels eines Vibrators 26 wird der Lichtleiter 24 in Vibration versetzt. So werden Laser-Speckle reduziert. Der Weg des Lichtes ändert sich durch das Vibrieren und so wird das Speckle-Muster zeitlich moduliert. Jede andere Form der Reduktion von Speckle eignet sich aber ebenfalls.

Das aus dem Lichtleiter 24 austretende Licht wird einem Speckle-Verminderer 28 zugeführt. In einer Ausbreitungsrichtung A hinter dem Speckle-Verminderer 28 ist ein Polarisationssteller 30 angeordnet. Der Polarisationssteller 30 umfasst einen Polarisator 32, einen ersten Flüssigkristallverzögerer 34.1 und einen zweiten Flüssigkristallverzögerer 34.2. Die Flüssigkristallverzögerer 34.1, 34.2 sind mit einer Recheneinheit 36 verbunden, die durch Ansteuern der Flüssigkristallverzögerer 34.1, 34.2 die Polarisation P₁₄ einstellt.

Der Polarisationsmesser 16 umfasst einen Polarisationszustands-Analysator 38, der einen Polarisationsfilter 40 sowie zwei Flüssigkristallverzögerer 34.3, 34.4 aufweist.

Die Flüssigkristallverzögerer 34.3, 34.4 sind ebenfalls mit der Recheneinheit 36 verbunden. In Ausbreitungsrichtung A hinter dem Polarisationszustands-Analysator 38 ist eine Kamera 42 angeordnet, mittels der ein ortsaufgelöstes Bild aufgenommen wird.

Die Flüssigkristallverzögerer werden von der Recheneinheit 36 so angesteuert, dass nacheinander alle benötigten Kombinationen aus polarisierter Beleuchtung und Messung der Polarisationszustände realisiert werden. Anschließend werden die Bilder mit den Intensitätswerten nachfolgender Matrix berechnet:

| | | | |
|---|---|---|---|
| *M*₁₁= *HH*+*HV*+*VH*+*VV* | *M*₁₂= *HH*+*HV*-*VH*-*VV* | *M*₁₃= PH+PV-MH-MV | *M*₁₄= *RH*+*RV*-*LH*-*LV* |
| *M*₂₁= *HH*-*HV*+*VH*-*VV* | *M*₂₂= *HH*-*HV*-*VH*+*VV* | *M*₂₃= *PH-*P*V*-*MH*+*MV* | *M*₂₄= *RH*-*RV*-*LH*+*LV* |
| *M*₃₁= *HP*-*HM*+*VP*-*VM* | *M*₃₂= *HP*-*HM*-*VP*-*VM* | *M*₃₃= *PP*-*PM*-*MP*+*MM* | *M*₃₄= *RP*-*RM-LP*-*LM* |
| *M*₄₁= *HR*-*HL*+*VR*-*VL* | *M*₄₂= *HR*-*HL*-*VR*+*VL* | *M*₄₃= *PR*-*PL*-*MR*+*ML* | *M*₄₄= *RR*-*RL*-*LR*+*LL* |

wobei die Buchstaben jeweils für unterschiedliche Polarisationszustände stehen: H für Horizontal, V für Vertikal, P für +45°, M für -45°, L für Linkszirkular und R für Rechtszirkular. Der erste Buchstabe steht für den Polarisationszustand der Bestrahlung und der zweite für den gemessenen Zustand.

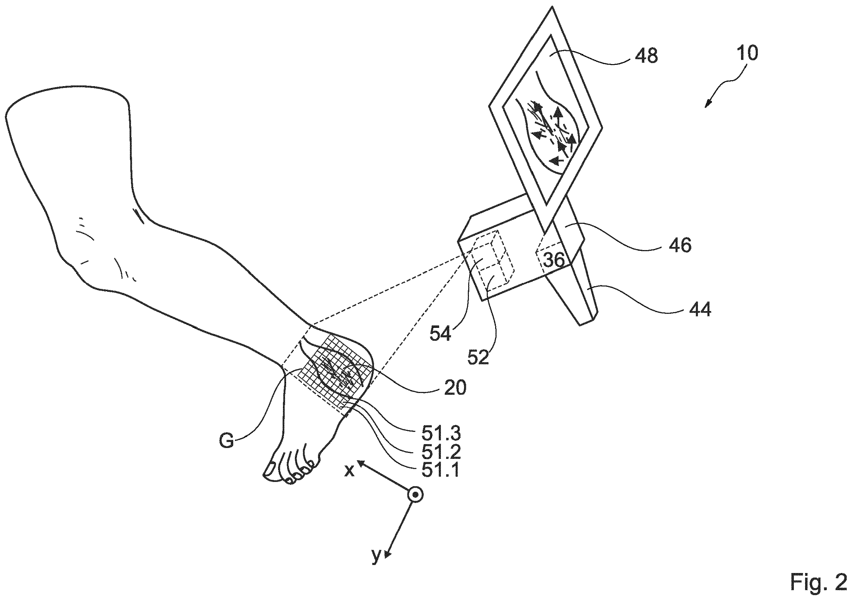

Figur 2 zeigt ein nicht-erfindungsgemäßes Faserorientierungs-Messgerät 10, das als Handgerät ausgebildet ist. In anderen Worten ist es möglich, das Faserorientierungs-Messgerät 10 mittels eines Handgriffs 44 zu halten, wobei eine Masse m kleiner ist als m = 3 kg, vorzugsweise kleiner als m = 1 kg. Die in Figur 1 gezeigten Komponenten sind in einem Gehäuse 46 aufgenommen.

Das Faserorientierungs-Messgerät 10 besitzt einen Bildschirm 48 zum Darstellen einer ortsaufgelösten Orientierung P von Faserabschnitten 50.i mit i = 1, 2, ... (vgl. Figur 1). Unter einem Faserabschnitt 50.i werden diejenigen Bereiche einer Endlosfaser verstanden, die sich im Gesichtsfeld eines Pixels 51.i der Kamera 42 befinden. Für die Auswertung ist es irrelevant, ob im Gesichtsfeld eines Pixels der Kamera 42 mehrere Fasern angeordnet sind oder Faserabschnitte 50.i einer sehr langen Faser.

Es ist möglich, dass das Faserorientierungs-Messgerät 10 eine Realbildkamera 52 aufweist, die ein Bild eines Gesichtsfeldes E aufnimmt. Das so aufgenommene Bild wird auf dem Bildschirm 48 dargestellt. Diesem Bild wird die bildliche Darstellung der ortsaufgelösten Orientierung O(x, y) überlagert.

Alternativ oder zusätzlich zum Bildschirm 48 kann das Faserorientierungs-Messgerät 10 einen Projektor 54 aufweisen, mit dem eine bildliche Darstellung der Orientierung O(x,y) und/oder eines Orientierungsgrads *σ* lagerichtig auf das aufgenommene Objekt im Gesichtsfeld G projiziert. Der Benutzer sieht folglich sowohl das Vlies 20 als auch die darauf projizierte bildliche Darstellung der ortsaufgelösten Orientierung O(x,y).

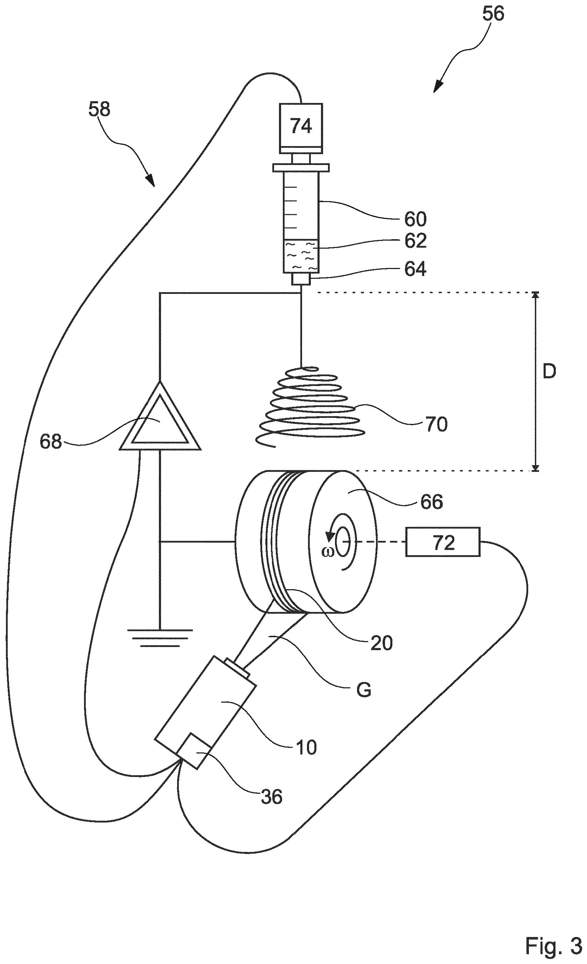

Figur 3 zeigt eine erfindungsgemäße Vlies-Herstellvorrichtung 56, die eine Spinnvorrichtung 58 und ein Faserorientierungs-Messgerät 10 aufweist. Die Spinnvorrichtung 58 besitzt einen Lösungsbehälter 60, in dem eine Lösung 62 aus einem Polymer in einem Lösungsmittel enthalten ist. Der Lösungsbehälter 60 besitzt eine Düse 64, durch die Lösung 62 austritt.

Die Spinnvorrichtung 58 besitzt zudem einen Kollektor 66, der von einer Spannungsquelle 68 auf eine Spannung U relativ zu der Lösung 62 in der Düse gebracht wird. Aus der Düse 64 austretende Lösung bildet einen Endlosfaden 70, der sich auf dem Kollektor 66 ablegt. Der Kollektor 66 rotiert mit einer Winkelgeschwindigkeit *ω*.

Das Gesichtsfeld G des Faserorientierungs-Messgeräts 10 ist auf den Kollektor 66 gerichtet. Es ist möglich und stellt unabhängig von den sonstigen Merkmalen der Ausführungsform gemäß Figur 3 ein vorteilhaftes Merkmal dar, wenn die Bildaufnahme durch das Faserorientierungs-Messgerät mit der Drehung des Kollektors 66 synchronisiert ist, sodass immer die gleiche Stelle auf dem Kollektor 66 mit Licht unterschiedlicher Polaritäten bestrahlt wird. Zwar ändert sich das Vlies nach jeder Umdrehung der Kollektors 66, diese Änderung ist jedoch vergleichsweise klein, sodass die Mueller-Matrix für den Bereich im Gesichtsfeld G berechnet werden kann.

Alternativ ist es möglich, dass das Faserorientierungs-Messgerät 10 das entstandene Vlies 20 nach der Herstellung vermisst. In diesem Fall bezieht sich die Regelung nur auf das Anpassen von Prozessparametern jeweils nach Herstellen eines Vlieses. Da das Verfahren zerstörungsfrei ist, ist dadurch eine Regelung möglich, was mit bestehenden Verfahren unmöglich ist. Vorzugsweise ist die Regelung aber eine In-Prozess-Regelung, das heißt, dass die Orientierung und/oder der Orientierungsgrad häufiger als einmal, insbesondere zumindest zweimal, während der Herstellung eines Vlieses gemessen wird. Wenn notwendig wird zumindest ein Prozessparameter während der Herstellung eines Vlieses zumindest einmal angepasst.

Der Kollektor 66 wird von einem Motor 72 angetrieben. Ein Volumenstrom V, der beispielsweise in Milliliter pro Sekunde gemessen wird und die Menge an Volumen bezeichnet, die pro Zeiteinheit durch die Düse 64 austritt, kann mittels eines Druckreglers 74 eingestellt werden. Der Motor 72, der Druckregler 74 und die Spannungsquelle 68 sind mit der Recheneinheit 36 verbunden. Die Recheneinheit 36 ist ausgebildet zum automatischen Regeln des Volumenstroms *V̇*, der Winkelgeschwindigkeit *ω* und/oder der Spannung U in Abhängigkeit von der gemessenen Orientierung O.

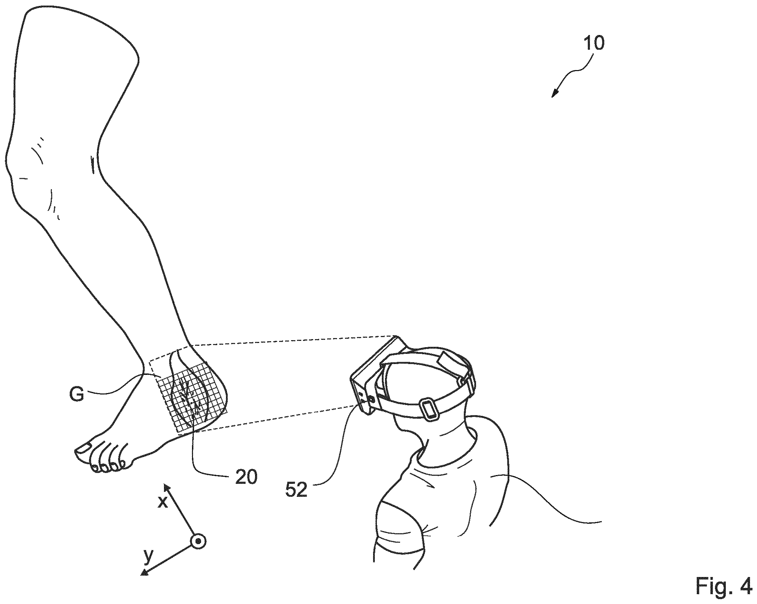

Figur 4 zeigt ein erfindungsgemäßes Faserorientierungs-Messgerät 10, das eine 3D-Brille 76 aufweist. Mittels des Polarisationsmessers 16 wird ein Bild des Vlieses 20 aufgenommen und die ortsaufgelöste Orientierung O(x, y) gemessen. Die bildliche Darstellung der ortsaufgelösten Orientierung O(x, y) wird einem Benutzer 78 lagerichtig dargestellt, sodass er die ortsaufgelöste Orientierung O(x, y) über dem Vlies 20 sieht.

### Bezugszeichenliste

| | | | |
|---|---|---|---|
| 10 | Faserorientierungs-Messgerät | 66 | Kollektor |
| 12 | Lichtquelle | 68 | Spannungsquelle |
| 14 | polarisiertes Licht | | |
| 16 | Polarisationsmesser | 70 | Endlosfaden72 Motor |
| 18 | Licht nach Wechselwirkung | 74 | Druckregler |
| | | 76 | 3D-Brille |
| 20 | Vlies | 78 | Benutzer |
| 22 | Laser | | |
| 24 | Lichtleiter | A | Ausbreitungsrichtung |
| 26 | Vibrator | c | Konzentration |
| 28 | Speckle-Verminderer | D | Kollektor-Düsen-Abstand |
| | | d | Abweichung |
| 30 | Polarisationssteller | dₘₐₓ | maximale Abweichung |
| 32 | Polarisator | | |
| 34 | Flüssigkristallverzögerer | G | Gesichtsfeld |
| 36 | Recheneinheit | i | Laufindex |
| 38 | Polarisationszustands-Analysator | M | Mueller-Matrix |
| | | m | Masse |
| 40 | Polarisationsfilter | O(x,y) | Orientierung |
| 42 | Kamera | | |
| 44 | Handgriff | P | Polarisation |
| 46 | Gehäuse | | P₁₈(t)zeitabhängige Polarisation |
| 48 | Bildschirm | U | Spannung |
| | | *λ* | Wellenlänge |
| 50 | Faserabschnitt | *σ* | Orientierungsgrad, Breitengrad |
| 51 | Pixel | *σ*ₘₐₓ | Maximal-Orientierungsgrad |
| 52 | Realbildkamera | | |
| 54 | Projektor | V | Volumenstrom |
| 56 | Vlies-Herstellvorrichtung | *ω* | Winkelgeschwindigkeit |
| 58 | Spinnvorrichtung | | |
| 60 | Lösungsbehälter | | |
| 62 | Lösung | | |
| 64 | Düse | | |

## Patentansprüche

1. Verfahren zum Überwachen eines Elektrospinnverfahrens mit dem Schritt eines Bestimmens einer Orientierung von Fasern (70) oder Faserabschnitten (50.i) eines Vlieses (20), mit den Schritten:
(a) Bestrahlen des Vlieses (20) mit polarisiertem Licht (14), dessen Polarisation (P) sich zeitabhängig ändert,
(b) Bestimmen einer ortsaufgelösten, zeitabhängigen Polarisation (P₁₈(t)) von Licht (18), das mit dem Vlies wechselgewirkt hat, sodass Polarisationsdaten erhalten werden, und
(c) Berechnen der ortsaufgelösten Orientierung (O_{(x,y)}) aus den Polarisationsdaten.

2. Verfahren nach Anspruch 1, **dadurch gekennzeichnet, dass** das Berechnen der ortsaufgelösten Orientierung (O(x,y)) aus den Polarisationsdaten ein Berechnen der Mueller-Matrix (M) umfasst.

3. Verfahren nach einem der vorstehenden Ansprüche **gekennzeichnet durch** die Schritte:
(a) zeitabhängiges Erfassen der Orientierung (P), insbesondere der Mueller-Matrix (M),
(b) Erfassen einer Abweichung (d) zu einer vorgegebenen Soll-Orientierung (P_{Soll}), insbesondere einer Soll-Mueller-Matrix (M_{Soll}), und
(c) Ausgeben einer Warnmeldung, wenn die Abweichung (d) einen vorgegebenen Schwellenwert überschreitet und/oder
Regeln zumindest eines Prozessparameters anhand der Abweichung.

4. Verfahren nach einem der vorstehenden Ansprüche, **gekennzeichnet durch** die Schritte:
(a) Bestimmen eines Orientierungsgrades (*σ*) in Form eines Breitenmaßes einer Dichte einer Orientierungsverteilungsfunktion der Orientierungen, und
(b) Verändern einer Kollektor-Geschwindigkeit (*ω*) eines Kollektors (66) einer Vlies-Herstellvorrichtung (56), die zum Durchführen des Elektrospinnverfahrens verwendet wird, wenn der Orientierungsgrad (*σ*) größer ist als ein vorgegebener Maximal-Orientierungsmaß (*σ*ₘₐₓ) und/oder
(c) Verändern eines Umweltparameters, der eine Evaporationsrate von Lösungsmittel, in dem ein zu verspinnendes Polymer gelöst ist, beeinflusst, wenn das Breitenmaß größer ist als das vorgegebene Maximal-Breitenmaß (*σ*ₘₐₓ), und
(d) Verändern einer Konzentration (c) an Polymer im Lösungsmittel, wenn das Breitenmaß größer ist als ein vorgegebenes Maximal-Breitenmaß (*σ*ₘₐₓ).

5. Vlies-Herstellvorrichtung zum Herstellen eines faserhaltigen Produkts, insbesondere eines Vlieses (20), mit
(a) einer Spinnvorrichtung (58) und
(b) einem Faserorientierungs-Messgerät (10) mit
(i) einer Lichtquelle (12) zum Erzeugen von polarisiertem Licht (14), dessen Polarisation (P) sich zeitabhängig ändert,
(ii) einem Polarisationsmesser (16) zum ortsaufgelösten Bestimmen einer zeitabhängigen Polarisation (P) von Licht (18), das mit dem Vlies (20) wechselgewirkt hat, sodass Polarisationsdaten erhalten werden, und
(iii) einer Recheneinheit (36), die ausgebildet ist zum automatischen Berechnen der Orientierung (O) aus den Polarisationsdaten.

6. Vlies-Herstellvorrichtung nach Anspruch 5, **dadurch gekennzeichnet, dass** die Faserorientierungs-Messgerät
(a) eine Kamera (42, 52) zum Aufnehmen von Bildern des Vlieses (20) und
(b) einen Bildschirm (48) zum Darstellen der Bilder aufweist und
(c) die Recheneinheit (36) ausgebildet ist zum Überlagern des Bildes des Vlieses (20) mit der bildlichen Darstellung der Orientierung (O).

7. Vlies-Herstellvorrichtung nach Anspruch 5 oder 6, **dadurch gekennzeichnet, dass** das Faserorientierungs-Messgerät
(a) einen Projektor (54) zum Projizieren der bildlichen Darstellung der Orientierung (O) aufweist,
(b) wobei die Recheneinheit (36) ausgebildet ist zum Ansteuern des Projektors (54), sodass dieser die bildliche Darstellung der Orientierung (O) lagerichtig auf das Vlies (20) projiziert.

8. Vlies-Herstellvorrichtung nach einem der Ansprüche 5 bis 7, **dadurch gekennzeichnet, dass**
die Recheneinheit (36) ausgebildet ist zum automatischen Durchführen eines Verfahrens mit den Schritten:
(i) zeitabhängiges Erfassen der Orientierung (O), insbesondere der Mueller-Matrix (M), der Fasern (70) oder Faserabschnitte (50.i),
(ii) Erfassen einer Orientierungs-Abweichung (d) zu einer vorgegebenen Soll-Orientierung (Pₛₒₗₗ), insbesondere einer vorgegebenen Soll-Mueller-Matrix (M_{Soll}), und
(iii) Ausgeben einer Warnmeldung, wenn die Orientierungs-Abweichung (d) einen vorgegebenen Schwellenwert (dₘₐₓ) überschreitet und/oder Regeln zumindest eines Prozessparameters anhand der Abweichung.

9. Vlies-Herstellvorrichtung nach einem der Ansprüche 5 bis 8, **dadurch gekennzeichnet, dass** die Recheneinheit ausgebildet ist zum Regeln zumindest eines Prozessparameters (*V̇*,*ω*,c), sodass die Orientierungs-Abweichung (d) minimiert wird.

10. Vlies-Herstellvorrichtung nach einem der Ansprüche 5 bis 9, **dadurch gekennzeichnet, dass** sie zum Elektrospinnen ausgebildet ist.

## Claims

1. A method for monitoring an electrospinning method with the step of determining an orientation of fibres (70) or fibre sections (50.i) of a non-woven material (20), comprising the steps:
(a) irradiating the non-woven material (20) with polarised light (14), the polarisation (P) of which changes depending on time,
(b) determining a spatially-resolved, time-dependent polarisation (P₁₈(t)) of light (18) that has interacted with the non-woven material, thereby obtaining polarisation data, and
(c) calculating the spatially-resolved orientation (O_{(x,y)}) from the polarisation data.

2. The method according to claim 1, **characterised in that**
the calculation of the spatially-resolved orientation (O(x,y)) from the polarisation data comprises a calculation of the Mueller matrix (M).

3. The method according to one of the preceding claims **characterised by** the steps:
(a) time-dependent detection of the orientation (P), in particular the Mueller matrix (M),
(b) detecting a deviation (d) from a predetermined target orientation (P_{Soll}), in particular a target Mueller matrix (M_{Soll}), and
(c) emitting a warning if the deviation (d) exceeds a predetermined threshold value and/or
regulating at least one process parameter using the deviation.

4. The method according to one of the preceding claims, **characterised by** the steps:
(a) determining a degree of orientation (*σ*) in the form of a width dimension of a density of an orientation distribution function of the orientations, and
(b) altering a collector speed (*ω*) of a collector (66) of a non-woven material production device (56), which is used to carry out the electrospinning method, if the degree of orientation (*σ*) is greater than a predefined maximum orientation dimension (*σ*ₘₐₓ) and/or
(c) altering an environmental parameter that influences an evaporation rate of solvent, in which a polymer to be spun is dissolved, if the width dimension is greater than the predefined maximum width dimension (*σ*ₘₐₓ), and
(d) altering a concentration (c) of polymer in the solvent if the width dimension is greater than a predefined maximum width dimension (*σ*ₘₐₓ).

5. A non-woven material production device for producing a fibrous product, in particular a non-woven material (20), with
(a) a spinning device (58) and
(b) a fibre orientation measuring device (10) with
(i) a light source (12) for generating polarised light (14), the polarisation (P) of which changes depending on time,
(ii) a polarisation gauge (16) for the spatially-resolved determination of a time-dependent polarisation (P) of light (18) that has interacted with the non-woven material (20), thereby obtaining polarisation data, and
(iii) a computing unit (36) configured to automatically calculate the orientation (O) from the polarisation data.

6. The non-woven material production device according to claim 5, **characterised in that** the fibre orientation measuring device comprises
(a) a camera (42, 52) for capturing images of the non-woven material (20) and
(b) a screen (48) for displaying the images, and
(c) the computing unit (36) is configured to superimpose the image of the non-woven material (20) with the visual representation of the orientation (O).

7. The non-woven material production device according to claim 5 or 6, **characterised in that** the fibre orientation measuring device comprises
(a) a projector (54) for projecting the visual representation of the orientation (O),
(b) the computing unit (36) being configured to control the projector (54), so that the visual representation of the orientation (O) projects onto the non-woven material (20) in the correct position.

8. The non-woven material production device according to one of the claims 5 to 7, **characterised in that**
the computing unit (36) is configured to automatically carry out a method comprising the steps:
(i) time-dependent detection of the orientation (O), in particular the Mueller matrix (M), the fibres (70) or fibre sections (50.i),
(ii) detecting an orientation deviation (d) from a predetermined target orientation (P,_{Soll}), in particular a predetermined target Mueller matrix (M_{Soll}), and
(iii) emitting a warning if the orientation deviation (d) exceeds a predetermined threshold value (dₘₐₓ) and/or
regulating at least one process parameter using the deviation.

9. The non-woven material production device according to one of the claims 5 to 8, **characterised in that** the computing unit is configured to regulate at least one process parameter (*V̇*,ω,c), thereby minimising the orientation deviation (d).

10. The non-woven material production device according to one of the claims 5 to 9, **characterised in that** it is configured for electrospinning.

## Revendications

1. Procédé de surveillance d'un procédé d'électrofilage, comprenant l'étape consistant à déterminer une orientation de fibres (70) ou de portions de fibres (50.i) d'un non-tissé (20), comprenant les étapes consistant à :
(a) irradier le non-tissé (20) avec une lumière polarisée (14) dont la polarisation (P) varie en fonction du temps,
(b) déterminer une polarisation (P₁₈(t)) à résolution spatiale, dépendant du temps, de la lumière (18) qui a interagi avec le non-tissé, de manière à obtenir des données de polarisation, et
(c) calculer l'orientation (O_{(x,y)}) à résolution spatiale à partir des données de polarisation.

2. Procédé selon la revendication 1, **caractérisé en ce que** le calcul de l'orientation (O_{(x,y)}) à résolution spatiale à partir des données de polarisation comprend un calcul de la matrice de Mueller (M).

3. Procédé selon l'une des revendications précédentes, **caractérisé par** les étapes consistant à :
(a) détecter en fonction du temps l'orientation (P), en particulier la matrice de Mueller (M),
(b) détecter un écart (d) par rapport à une orientation de consigne prédéfinie (P_{cons}), en particulier par rapport à une matrice de Mueller de consigne (M_{cons}), et
(c) émettre un message d'avertissement si l'écart (d) dépasse une valeur seuil prédéfinie, et/ou
réguler au moins un paramètre du processus en fonction de l'écart.

4. Procédé selon la revendication 2 ou 3, **caractérisé par** les étapes consistant à :
(a) déterminer un degré d'orientation (σ) sous la forme d'une valeur de largeur d'une densité d'une fonction de distribution des orientations, et
(b) modifier une vitesse de collecteur (ω) d'un collecteur (66) d'un dispositif de fabrication de non-tissé (56), utilisé pour exécuter le procédé d'électrofilage, si le degré d'orientation (σ) est supérieur à une valeur d'orientation maximale prédéterminée (σₘₐₓ), et/ou
(c) modifier un paramètre environnemental qui affecte un taux d'évaporation d'un solvant dans lequel un polymère à filer est dissous, si la valeur de largeur est supérieure à la valeur de largeur maximale prédéterminée (σₘₐₓ), et
(d) modifier une concentration (c) de polymère dans le solvant, si la valeur de largeur est supérieure à une valeur de largeur maximale prédéterminée (σₘₐₓ).

5. Dispositif de fabrication de non-tissé pour fabriquer un produit contenant des fibres, en particulier un non-tissé (20), comprenant
(a) un dispositif de filage (58), et
(b) un appareil (10) de mesure de l'orientation des fibres, comprenant
(i) une source de lumière (12) pour produire de la lumière polarisée (14) dont la polarisation (P) varie en fonction du temps,
(ii) un polarimètre (16) pour déterminer, avec une résolution spatiale, une polarisation (P), dépendant du temps, de la lumière (18) qui a interagi avec le non-tissé (20), de manière à obtenir des données de polarisation, et
(iii) une unité de calcul (36) conçue pour calculer automatiquement l'orientation (O) à partir des données de polarisation.

6. Dispositif de fabrication de non-tissé selon la revendication 5, **caractérisé en ce que** l'appareil de mesure de l'orientation des fibres comprend
(a) une caméra (42, 52) pour prendre des images du non-tissé (20), et
(b) un écran (48) pour afficher les images,
(c) l'unité de calcul (36) étant conçue pour superposer l'image du non-tissé (20) à la représentation visuelle de l'orientation (O).

7. Dispositif de fabrication de non-tissé selon la revendication 5 ou 6, **caractérisé en ce que** l'appareil de mesure de l'orientation des fibres comprend
(a) un projecteur (54) pour projeter la représentation visuelle de l'orientation (O),
(b) l'unité de calcul (36) étant conçue pour commander le projecteur (54) de sorte que celui-ci projette la représentation visuelle de l'orientation (O) en position correcte sur le non-tissé (20).

8. Dispositif de fabrication de non-tissé selon l'une des revendications 5 à 7, **caractérisé en ce que** l'unité de calcul (36) est conçue pour exécuter automatiquement un procédé comprenant les étapes consistant à :
(i) détecter en fonction du temps l'orientation (O), en particulier la matrice de Mueller (M), des fibres (70) ou des portions de fibres (50.i),
(ii) détecter un écart d'orientation (d) par rapport à une orientation de consigne prédéfinie (P_{cons}), en particulier par rapport à une matrice de Mueller de consigne prédéfinie (M_{cons}), et
(iii) émettre un message d'avertissement si l'écart d'orientation (d) dépasse une valeur seuil prédéfinie (dₘₐₓ), et/ou
réguler au moins un paramètre du processus en fonction de l'écart.

9. Dispositif de fabrication de non-tissé selon l'une des revendications 5 à 8, **caractérisé en ce que** l'unité de calcul est conçue pour réguler au moins un paramètre du processus (V̇, ω, c) de manière à minimiser l'écart d'orientation (d).

10. Dispositif de fabrication de non-tissé selon l'une des revendications 5 à 9, **caractérisé en ce qu'**il est conçu pour l'électrofilage.
